# EUROPEAN PATENT APPLICATION

(11) **EP 4 838 282 A1**
(43) Date of publication of application: **11.11.2026**
(21) Application number: 25275031.0
(22) Date of filing: 09.05.2025
(51) Int. Cl.: G02B 27/00

(54) **WAVEGUIDE DEVICE FOR AUGMENTED REALITY DISPLAY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A waveguide device for use in an augmented reality device is described. The waveguide device comprises a transparent waveguide and a plurality of diffractive elements. The plurality of diffractive elements comprise at least two of: an incoupling diffractive element, an outcoupling diffractive element and a pupil expansion element. At least one of the diffractive elements in the plurality of diffractive elements comprises a two-dimensional, 2D, lattice of holes or rods formed in a surface of the waveguide, wherein the 2D lattice of holes or rods is a photonic crystal or photonic quasicrystal.

## Description

### FIELD

The present invention relates to a waveguide device for use in an augmented reality (AR) display, such as a heads up display (HUD), head mounted display (HMD) or any other waveguide-based transparent display.

### BACKGROUND

Augmented reality (AR) devices often use a transparent waveguide device to couple light from a light source (e.g. an image projector) into the user's eye whilst also allowing the user to simultaneously view the real world through the transparent waveguide. The light source projects an image such that the user sees the image overlaid over their view of the real world. The transparent waveguide device includes a waveguide and two diffractive elements - an incoupling element that couples the incident light from the light source into the waveguide and an outcoupling element that outcouples the light from the waveguide such that it is incident on the user's eye. The incoupling and outcoupling elements are typically formed from gratings which are formed in or on the waveguide. The waveguide may also include a third pupil-expanding diffractive structure, sometimes called a fold grating.

The embodiments described below are not limited to implementations which solve any or all of the disadvantages of known waveguide devices in AR displays.

### SUMMARY

According to an aspect of the present invention, there is provided a waveguide device for use in an augmented reality device, the waveguide device comprising: a transparent waveguide and a plurality of diffractive elements, wherein the plurality of diffractive elements comprise at least two of: an incoupling diffractive element, an outcoupling diffractive element and a pupil expansion element, wherein at least one of the diffractive elements in the plurality of diffractive elements comprises a two-dimensional, 2D, lattice of holes or rods formed in a surface of the waveguide, wherein the 2D lattice of holes or rods is a photonic crystal or photonic quasicrystal.

By using diffractive elements as described above, the optical properties of the waveguide device are improved, e.g. in terms of coupling efficiency, field of view and/or bandwidth. The waveguide device may also be less visible to the user and hence has improved visual quality.

Each of the diffractive elements in the plurality of diffractive elements may comprise a 2D lattice of holes or rods formed in a surface of the waveguide, wherein the 2D lattice of holes or rods is a photonic crystal or photonic quasicrystal. Alternatively, at least one of the diffractive elements in the plurality of diffractive elements may comprise a grating.

The outcoupling diffractive element may comprise a two-dimensional, 2D, lattice of holes or rods formed in a surface of the waveguide, wherein the 2D lattice of holes or rods is a photonic or quasiphotonic crystal.

The 2D lattice of holes or rods may be a 2D triangular lattice of holes or rods.

The 2D lattice of holes or rods may be a 2D square lattice of holes or rods.

The 2D lattice of holes or rods may be a 2D Stampfli lattice of holes or rods.

The 2D lattice of holes or rods may be a quasicrystal formed from a plurality of holes or rods.

The 2D lattice of holes or rods may be formed at an angle that is not perpendicular to the surface of the waveguide. By using blazed holes / rods, the efficiency and bandwidth at normal incidence may be increased. Vignetting may also be eliminated. The holes or rods may be formed using an angled etch. The 2D lattice may be a 2D lattice of holes and wherein the holes are half-conical or rounded tapering trenches.

The holes or rods may be circular.

Each hole or rod may have a radius of 250nm or less.

The holes or rods may be non-circular.

A pitch of the holes or rods in the 2D lattice may be no more than 500nm.

The holes or rods may be 150-300nm deep.

The holes or rods may be 150-832nm deep.

The waveguide may be formed from resin. By using resin, the weight of the waveguide device, and the overall augmented reality device is reduced.

The waveguide may be formed from glass.

A second aspect provides an augmented reality device comprising a waveguide device according to the first aspect.

The augmented reality device may be a heads up display.

The augmented reality device may be a head mounted display.

A third aspect provides a method of manufacturing a waveguide device according to the first aspect, the method comprising: coating a substrate with a layer of resin; applying an intermediate resin stamp to the layer of resin; curing the resin; and removing the intermediate resin stamp, wherein the intermediate resin stamp is formed by: coating a second substrate with a layer of a second resin; applying a hard master device to the layer of the second resin, wherein the hard master device comprises a 2D lattice of holes or rods formed in a surface of the waveguide, wherein the 2D lattice of holes or rods is a photonic crystal or photonic quasicrystal; curing the second resin; and removing the hard master device.

This method produces lightweight waveguide devices in an efficient manner which is suitable for mass production.

### BRIEF DESCRIPTION OF THE FIGURES

Embodiments of the invention will now be described by way of example only with reference to the figures, in which:
Figure 1 shows a schematic view of a first example waveguide device;
Figure 2 shows a schematic view of a second example waveguide device; and
Figure 3 shows a Stampfli lattice arrangement;
Figure 4 shows a schematic diagram of an example 2D lattice;
Figure 5 shows a cross-sectional profile through the example in Figure 4;
Figure 6 shows an SEM of an 2D triangular lattice;
Figure 7 shows a schematic diagram of another example 2D lattice;
Figure 8 shows a graph of wavelength for maximum efficiency of the projected beam (i.e. the output beam from the diffractive element) as a function of incidence angle;
Figure 9 shows a graph of bandwidth at FWHM as a function of incidence angle;
Figure 10 shows a graph of maximum efficiency of the projected beam as a function of incidence angle;
Figure 11 is a schematic diagram showing a waveguide device comprising a waveguide with a 2D square lattice of blazed holes in cross-section;
Figure 12 is a schematic diagram showing the waveguide of Figure 11 from above;
Figure 13 shows a first cross-sectional profile through the example in Figure 12;
Figure 14 shows a second cross-sectional profile through the example in Figure 12;
Figure 15A shows a graph of the wavelength of maximum efficiency for an example blazed lattice;
Figure 15B shows the maximum efficiency as a function of incidence angle for two square lattices, one with blazed holes and the other with straight holes;
Figure 16 shows an example method of manufacture for an improved diffraction element as described herein which comprises a straight 2D lattice;
Figure 17 shows an example method of manufacture for an improved diffraction element as described herein which comprises a blazed 2D lattice;
Figure 18 shows an example method of creation of an intermediate resin stamp; and
Figure 19 shows how the intermediate stamp of Figure 18 can be used to fabricate waveguide devices from resin.

Common reference numerals are used throughout the figures to indicate similar features.

### DETAILED DESCRIPTION

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

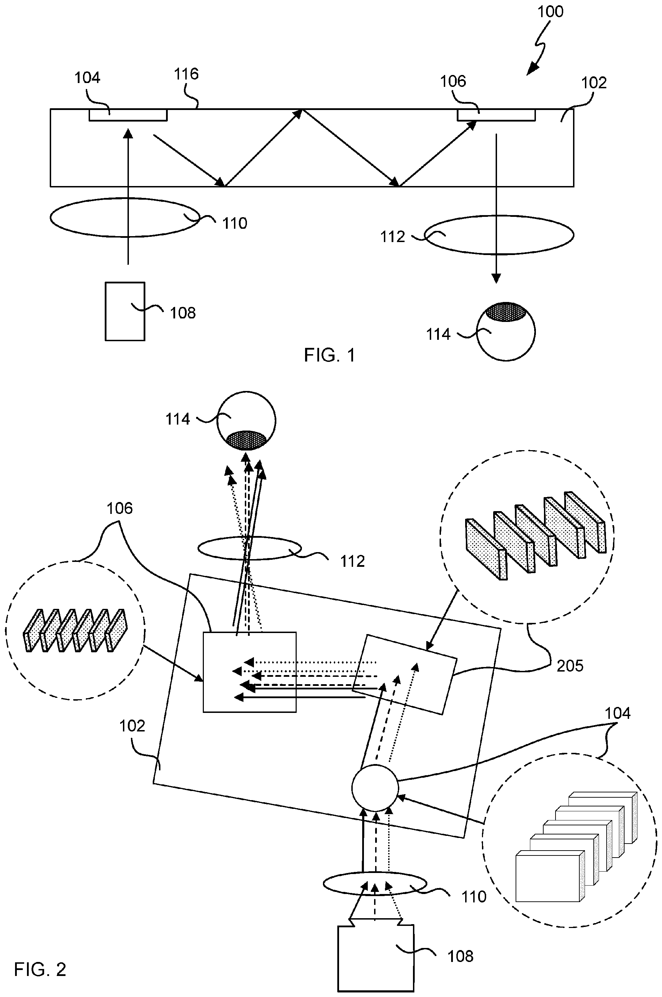

As described above, AR devices often use a transparent waveguide device to couple light from a light source into the user's eye whilst also allowing the user to simultaneously view the real world through the transparent waveguide. Figure 1 shows a schematic view of an example waveguide device 100 which comprises a transparent waveguide 102 and two diffractive elements - an incoupling element 104 that couples the incident light from a light source 108 into the waveguide 102 and an outcoupling element 106 that outcouples the light from the waveguide 102 such that it is incident on the user's eye 114. As shown in Figure 1, there may be lenses 110, 112 as part of projection optics between the light source 108 and the waveguide 102 and between the waveguide 102 and the user's eye 114. The incoupling and outcoupling elements are typically formed from gratings or prisms which, in the example shown in Figure 1, are formed in the waveguide; however in other examples, the incoupling and outcoupling elements may be formed on the surface 116 of the waveguide 102 or may be separate elements which are attached to the surface 116 of the waveguide 102. The eyebox of an AR device is the volume where a viewer receives a usable image from the light source and the position and size of the eyebox is a consequence of the optical arrangement within the AR device which includes the transparent waveguide device 100. Whilst not shown in Figure 1, the waveguide device 100 may also comprise other diffractive elements, for example to perform pupil expansion (i.e. to increase the size of the eyebox).

Whilst Figure 1 shows a straight waveguide, other arrangements of the elements may be used dependent upon the particular application and a further example is shown in Figure 2. In this example, there is a third element 205 which may be a reflective element (e.g. to fold the beam) or a diffractive element (e.g. to perform pupil expansion). In the example shown in Figure 2, the incoupling element 104 and the outcoupling element 106 are gratings.

Described herein are improved diffractive elements for use in a transparent waveguide device for an AR device. The improved diffractive elements described herein comprise a two-dimensional (2D) lattice of holes or rods formed in a surface of the waveguide. Where holes are used, the holes extend into the waveguide to a pre-defined depth but do not extend all the way through the waveguide. Where rods are used, these extend from the surface of the waveguide and are of a pre-defined height. The 2D lattice of holes or rods is a sub-wavelength structure (i.e. the hole/rod radius, spacing and pitch are less than the wavelength of the visible light that is output by the light source) and hence the 2D lattice is a photonic crystal or photonic quasicrystal dependent upon the particular lattice arrangement. The improved diffractive elements are intended for use with visible light (e.g. wavelengths of 400-800nm). These improved diffractive elements may be used in the arrangements shown in Figures 1-3 (i.e. as the incoupling and/or outcoupling elements 104, 106 and/or for pupil expansion). The transparent waveguide may be formed from any transparent material that has a refractive index that is suited to the particular application and design.

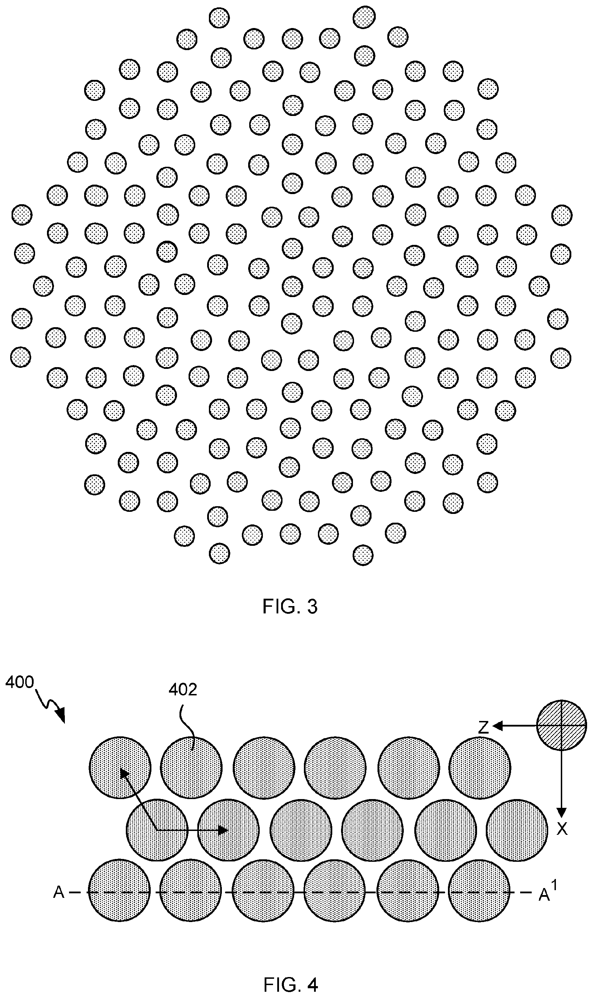

The term 'photonic crystal' is used herein to describe those 2D lattices of holes of sub-wavelength dimensions where the lattice is periodic in two dimensions and hence is defined by a single repeated shape, such as a triangle or square. In contrast, the term 'photonic quasicrystal' is used herein to describe those 2D lattices of holes of sub-wavelength dimensions where the lattice is quasiperiodic in two dimensions and may be defined by tiling of two or more shapes. For example, triangles and rhombi in a Penrose lattice or kites and darts in a Penrose lattice. A Stampfli lattice is another example of a photonic quasicrystal and an example is shown in Figure 3. A 12-fold Stampfli lattice is composed of equilateral triangles, squares and rhombi in a dodecagonal pattern with 12-fold rotational symmetry but no translational symmetry. Other quasicrystal lattices may have 8 or 10-fold rotational symmetry. Another example of a photonic quasicrystal is a Fibonacci lattice.

An AR device that includes a transparent waveguide device comprising an improved diffractive element as described herein, provides improved optical properties. For example, the use of an improved diffractive element as described herein improves coupling of light into and/or out of the waveguide in terms of improved coupling efficiencies, wider field of view (FOV) and/or bandwidth. The FOV and bandwidth may be defined as the full width half maximum (FWHM) FOV / bandwidth, to limit the FOV / bandwidth to that with usable efficiency. The improved diffractive elements may enable the use of a lightweight polymer / resin with high refractive index, instead of a glass with similar refractive index, and this results in a reduction in the weight of the overall AR device. Weight reduction of the overall AR device can be achieved even where glass is used because the increased optical efficiency of the diffractive element means that the image generation equipment (which generates the image in the AR device) can be lower power and/or less complex which means that it is lighter. This may be particularly beneficial for HMDs and also for HUDs which are used in weight-sensitive applications (e.g. in aircraft).

In addition to providing improved optical properties, a transparent waveguide device comprising an improved diffractive element as described herein, may be less visible to the user and so improves the visual quality (i.e. the user has a clearer view of the real world when looking through a transparent waveguide device comprising an improved diffractive element as described herein compared to a similar device which instead uses gratings for the diffractive elements). This improved visibility is particularly true for non-blazed structures and is a consequence of the lack of angled components, unlike in a grating-based device (e.g. as all holes/rods are vertical). The lack of slanted components also reduces the complexity of the manufacturing process of waveguide device and may also improve reliability.

Also described herein are improved manufacturing techniques for the diffractive elements as described herein. These improved manufacturing techniques enable high throughput manufacture of a lightweight, transparent waveguide device comprising an improved diffractive element as described herein. The manufacturing technique uses nanoimprint lithography to form the 2D lattice of holes in a lightweight, high refractive index, resin and involves the use of a flexible, low-cost, intermediate stamp.

The improved diffractive elements described herein comprise a 2D lattice of holes or rods formed in a surface of the waveguide. Referring back to the example arrangement shown in Figure 1, the 2D lattice of holes/rods is formed in the surface 106 of the waveguide which is on an opposite side to the light source 108, for an incoupling element and an opposite side to the user's eye 114, for an outcoupling element. It will be appreciated that in other arrangements, one or both of the diffractive elements may be placed on the other side of the waveguide and hence the 2D lattice of holes/rods may be formed in the opposite surface (i.e. the surface of the waveguide that is adjacent to the light source 108 and/or the surface of the waveguide that is adjacent to the user's eye 114). Although it is not shown in Figure 1, the waveguide 102 typically has an outer cladding of a lower refractive index than the waveguide itself. In the regions where the holes/rods are formed, there may be no outer cladding if the holes are air filled or the rods are surrounded by air. This may be achieved, for example, by removing existing outer cladding in these regions or layering the cladding over the waveguide (and potentially the diffractive elements as well) such that the air-filled holes or air-filled gaps between rods remain free of cladding (e.g. by bonding a layer of lower refractive index cladding material onto the outer surfaces of the waveguide after formation of the rods/holes). Whilst the examples below show diffractive elements with holes rather than rods, this is by way of example only, and in further variations of the described examples, the holes may be replaced by rods of the same shape and dimensions (e.g. surrounded by air).

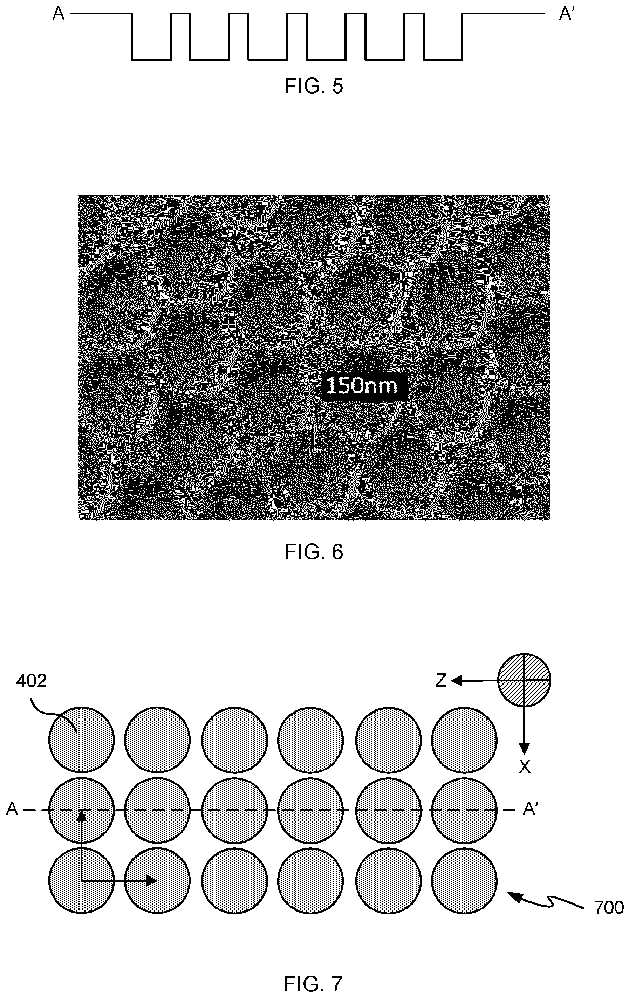

Figure 4 shows a schematic diagram of a first example 2D lattice 400 where the holes 402 are circular and the holes are arranged in a triangular lattice. Figure 5 shows the cross-sectional profile through a row of holes along the line A-A' marked in Figure 4. Figure 6 shows an SEM of an 2D triangular lattice produced in glass with a refractive index of 1.9. The photonic crystal lattice that is shown in Figure 6 comprises a 2D lattice of holes that are approximately 150nm deep with a hole diameter of approximately 300nm. The lattice has a triangular structure with a lattice pitch of approximately 350nm. In other examples, the holes may have a different depth, e.g. 200nm or 300nm. Using larger hole depth increases the diffraction efficiency of the structure. In further examples the depth of the holes may be 150-300nm or 150-200nm, in other examples the depth may be as small as 20nm or as large as 1000nm. Any suitable waveguide thickness may be used (e.g. 700µm).

The optimal depth may be modelled based on an effect called the pendulum or Pendellösung effect, where diffraction efficiency varies with structure depth, with maximalised diffraction efficiency at a hole depth which can be calculated based on the change in wave angle and wavelength. Minimum efficiency occurs at half this value. Integer multiples of these values have the same effect. The optimum value therefore depends on the specific device. For the example shown in Figure 6 and diffraction of a beam with a wavelength of 400nm, incident on glass with a refractive index of 2, with an angle change of 90 degrees, the optimal depth is 200nm. For diffraction of a beam with a wavelength of 700nm, incident on glass with a refractive index of 1.7, with an angle change of 30 degrees, the optimal depth is 823nm. These represent example extremes for AR devices and so the optimal depth range will fall within a range of 200-823nm or any integer multiple thereof.

In the example shown in Figure 6, the holes are air-filled; however in other examples, the holes may be back-filled, e.g. with a fluid or other material which has a lower refractive index than the glass, but a different refractive index to air. By back-filling the holes (or in-filling between rods) with a material having a different refractive index to air, the diffractive properties change as a consequence of the different refractive index difference. It will be appreciated that the effective diffractive index in a direction is dependent both upon the different refractive indexes of the materials involved (i.e. the material around the holes and the material, which may be air, in the holes, or the material forming the rods and the material, which may be air, around the rods) and the particular lattice arrangement (e.g. pitch, radius, lattice type). Examples of suitable materials which may be used include materials which can be applied by sputtering (e.g. metals or dielectric materials) or applying a coating (e.g. resins).

The tables below show example pitches and radii for the holes in a 2D triangular lattice for both incoupling elements and outcoupling elements. In other examples, the hole pitch may be in the range of 350-520nm and the hole radii in the range 30-250nm. The pitch of the lattice may also be referred to as the period of the lattice.

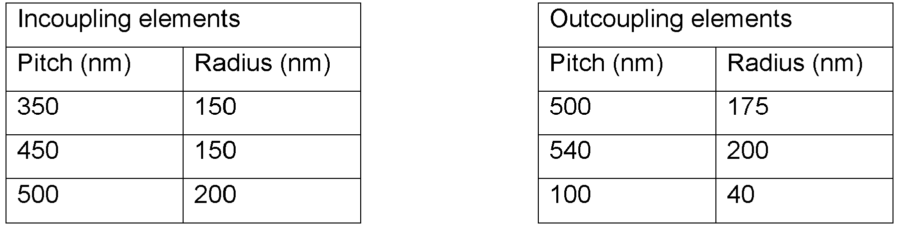

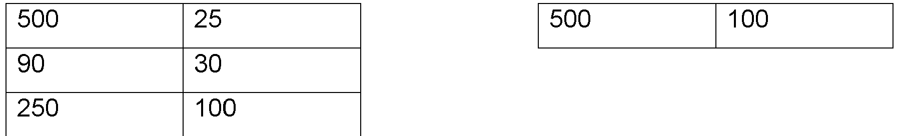

Experimental results for diffractive elements comprising a 2D triangular lattice of holes have shown efficiencies that range from around 50-75% with an FOV of 60° and with a maximum bandwidth from 80nm to 100nm. This presents an improvement over the 10% efficiency, 52° FOV and bandwidth of 45nm of surface relief gratings currently in use in AR systems.

Instead of having a triangular lattice arrangement, a Stampfli lattice (e.g. a 12-fold quasicrystal) may instead be used. The 2D lattice may, for example, be produced in glass with a refractive index of 1.9 and comprises a 2D lattice of holes that are approximately 150nm deep. In other examples, the holes may have a different depth, e.g. 200nm or 300nm. In further examples the depth of the holes may be 150-300nm or 150-200nm. The substrate in which the holes (or rods, where applicable) are formed may be made from any transparent material which has a suitable refractive index. The holes may be air-filled or, as described above, the holes may be back-filled, e.g. with a fluid or other material which has a lower refractive index than the substrate (e.g. the glass). Where back-filling is performed the fluid or other material may have a different refractive index to air.

The tables below show example pitches and radii for the holes in a 2D Stampfli lattice for both incoupling elements and outcoupling elements. In other examples, the hole pitch may be in the range of 350-520nm and the hole radii in the range 30-250nm.

| Incoupling elements | |
|---|---|
| Pitch (nm) | Radius (nm) |
| 350 | 130 |
| 545 | 250 |
| 490 | 20 |
| 120 | 50 |
| 80 | 30 |

| Outcoupling elements | |
|---|---|
| Pitch (nm) | Radius (nm) |
| 350 | 130 |
| 470 | 150 |
| 545 | 250 |
| 415 | 200 |
| 490 | 20 |
| 140 | 50 |
| 475 | 100 |

Experimental results for diffractive elements comprising a 2D Stampfli lattice of holes have shown an efficiency of 82% with an FOV of 38° and with a bandwidth of 45nm. This presents a significant efficiency improvement over the 10% efficiency of surface relief gratings currently in use in AR systems, with a slightly reduced FOV and similar bandwidth.

Figure 7 shows a schematic diagram of a second example 2D lattice 600 where the holes are circular and the holes are arranged in a square lattice. The cross-section shown in Figure 5 is also applicable to this lattice arrangement. The 2D lattice may, for example, be produced in glass with a refractive index of 1.9, although any transparent material may be used with a refractive index which is selected for the particular application. In this example the lattice comprises a 2D lattice of holes that are approximately 150nm deep. In other examples, the holes may have a different depth, e.g. 200nm or 300nm. In further examples the depth of the holes may be 150-300nm or 150-200nm. The holes may be air-filled or, as described above, the holes may be back-filled, e.g. with a fluid or other material which has a lower refractive index than the substrate (e.g. glass), where this may be a different refractive index to air.

The tables below show example pitches and radii for the holes in a 2D square lattice for both incoupling elements and outcoupling elements. In other examples, the hole pitch may be in the range of 350-520nm and the hole radii in the range 30-250nm.

| Incoupling elements | |
|---|---|
| Pitch (nm) | Radius (nm) |
| 500 | 150 |
| 500 | 190 |
| 450 | 200 |
| 80 | 30 |
| 350 | 80 |

| Outcoupling elements | |
|---|---|
| Pitch (nm) | Radius (nm) |
| 480 | 150 |
| 500 | 200 |
| 100 | 40 |
| 80 | 30 |
| 350 | 80 |
| 450 | 120 |

Experimental results for diffractive elements comprising a 2D square lattice of holes have shown efficiencies that range from 20-40% with an FOV of 50° and with a maximum bandwidth from 70nm to 150nm. This presents an improvement over the 10% efficiency and bandwidth of 45nm of surface relief gratings currently in use in AR systems with a similar FOV.

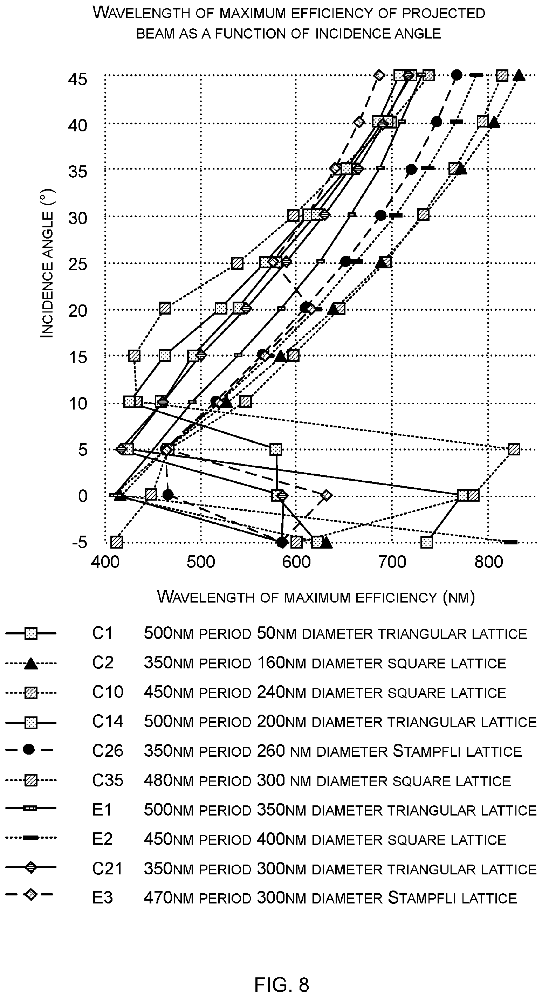

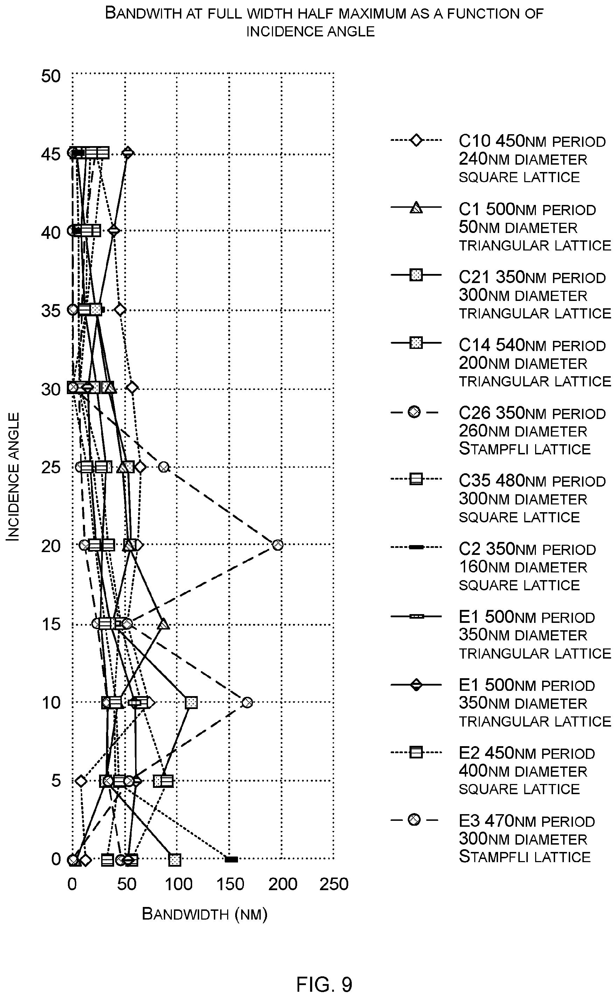

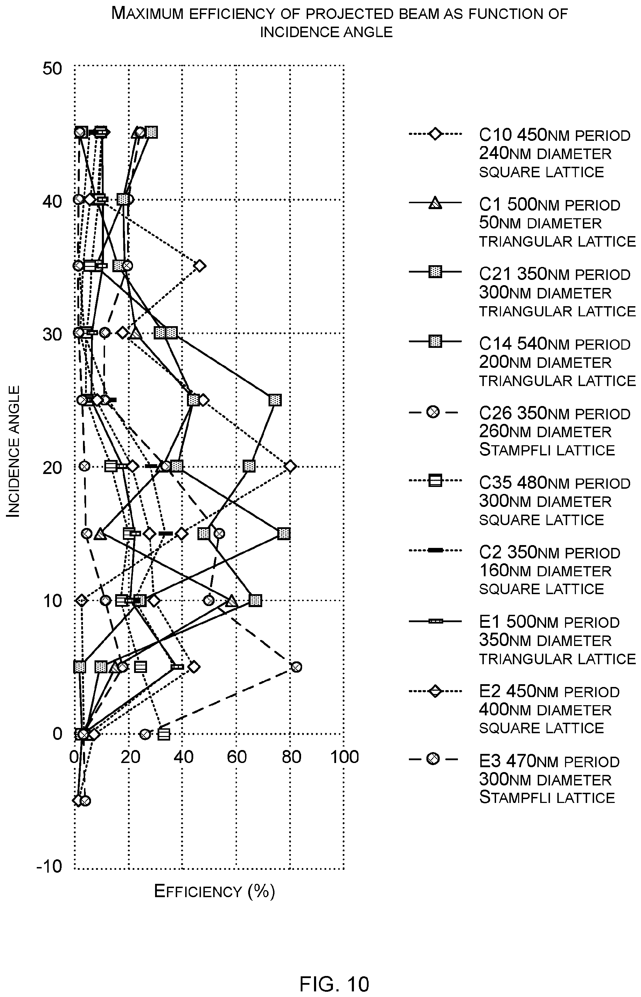

Figures 8-10 show graphs of experimental results for various combinations of lattice type, pitch and diameter. Figure 8 shows a graph of wavelength for maximum efficiency of the projected beam (i.e. the output beam from the diffractive element) as a function of incidence angle. Figure 9 shows a graph of bandwidth at FWHM as a function of incidence angle and Figure 10 shows a graph of maximum efficiency of the projected beam as a function of incidence angle. The results are normalised by reference measurement (e.g. light passing through a waveguide without a diffractive element) and laser source spectrum.

In various examples, a waveguide device may comprise a first improved diffractive element as an incoupling element which comprises any of the lattice arrangements described herein (e.g. triangular, square or quasiperiodic) and an outcoupling element which comprises a triangular or Stampfli lattice. In another example, both the incoupling and outcoupling elements may comprise a triangular or Stampfli lattice. In an example, the incoupling element may be a 2D triangular lattice as this provides a higher quality incoupling element compared to 2D square lattices. The outcoupling element may also be a 2D triangular lattice as these provide higher bandwidth and angular range compared to 2D square lattices. In an example, the incoupling element may be a 2D Stampfli lattice, or other photonic quasicrystal, as they provide a higher coupling efficiency at lower incidence angles in comparison to photonic crystals and lower incidence angles are expected for the incoupling element. As described above, these 2D lattices are periodic or quasiperiodic in two dimensions.

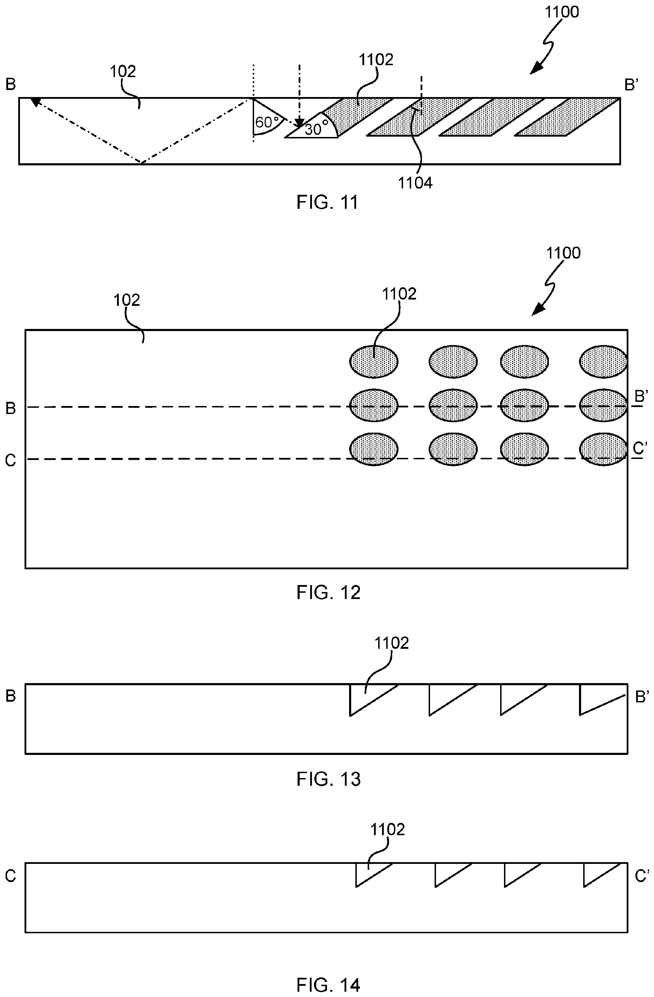

In the examples, described above, the holes in the 2D lattices extend into the surface of the waveguide in a direction that is perpendicular to the surface, as shown in the cross-section in Figure 5. In other examples, however, the 2D lattices may be blazed such that the holes extend into the surface of the waveguide at an angle which is not perpendicular to the surface. This is shown in Figures 11 and 12. Figure 11 is a schematic diagram showing a waveguide device 1100 comprising a waveguide 102 with a 2D square lattice of blazed holes 1102 in cross-section. As described above, the holes 1102 are air-filled. The blaze angle 1104 defines the angle to the surface normal of the holes that form the 2D lattice. Figure 12 is a schematic diagram showing the same waveguide device 1100 from above. The 2D lattice of holes 1102 is visible in Figure 12 and whilst the holes in Figure 11 are cylindrical in shape, the openings in the surface of the waveguide, as shown in Figure 12, are elliptical as a consequence of the blazing. In the example shown the blaze angle 1104 is 60°.

Whilst Figure 11 shows cylindrical holes, as a consequence of the etching process used to form the blazed holes, the resulting blazed holes 1102 may not be cylindrical in shape but instead may be half-conical or rounded tapering trenches as shown in the cross sections in Figures 13 and 14 (with the view from above being as shown in Figure 12). The cross-section in Figure 13 is drawn through the centre of the hole (e.g. along dotted line B-B' in Figure 12) and the cross-section in Figure 14 is drawn offset from the centre of the hole (e.g. along dotted line C-C' in Figure 12).

Experimental results for diffractive elements comprising a 2D lattice of blazed holes showed increased efficiency and bandwidth at normal incidence compared to the corresponding straight (i.e. unblazed) lattice. Across the full range of incidence angles, a 2D square blazed lattice of holes showed a slightly higher efficiency of 40-80% compared to the straight square lattice, a triangular blazed lattice had similar efficiencies to the triangular straight lattice and whilst for Stampfli lattices the efficiency was reduced (50% compared to 82% for the straight lattice), the FOV was improved (38° to 60°) and the bandwidth increased (from 50nm to 100nm). A blazed Stampfli lattice structure with 475nm period and 100nm hole radius had a wavelength of maximum efficiency at 550nm with only a 25nm variation and efficiency of 40%, and 65nm bandwidth over it's 60° FOV, eliminating a vignetting issue that was present in some other blazed structures as a consequence of the change in angle of maximum efficiency with incidence angle in those other structures.

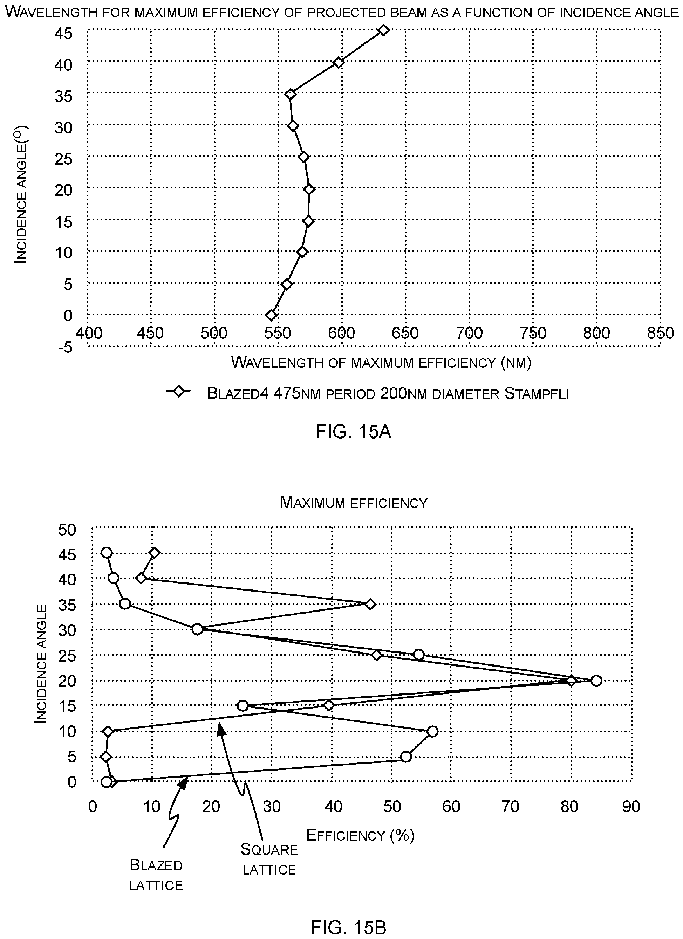

Figure 15A shows a graph of the wavelength of maximum efficiency for an example blazed lattice (a blazed 475nm period 200nm diameter Stampfli lattice). The wavelength of maximum efficiency may vary in diffractive structures, causing vignetting over the FOV, when a single wavelength is used which becomes low efficiency at high angles. Vignetting is the loss of the image at the edges of the image and can occur for just a single wavelength from that projection as well as for the entire image. The graph of wavelength of maximum efficiency as a function of incidence angle in Figure 15 A shows that over the 60 degree FOV given by the maximum efficiency, the wavelength of maximum efficiency is consistently, over the 30 degree incidence range, within 25nm of the value at the 0 degree incidence angle. As the bandwidth is 50nm, this 25nm variation will fall within this and for a colour within 25nm of the wavelength of maximum efficiency, it will be well displayed over the 30 degree incident angle range with no vignetting and high quality. This graph therefore shows that vignetting is eliminated through the use of a blazed lattice.

Figure 15B shows the maximum efficiency as a function of incidence angle for two square lattices, both with 450nm pitch and 120nm hole radius, but one with blazed holes and the other with straight holes. Mode switching is the initial change in efficiency of the device as incidence angle increases. As the change occurs at a lower angle for the blazed lattice, mode switching is reduced compared to when it occurs at a high angle, as the lower efficiency mode is present over less of the incidence angle range. Reducing mode switching improves performance as increased mode switching results in increased vignetting.

The improved diffractive elements described herein may comprise a region comprising the 2D lattice of holes. The region may be square, rectangular, circular (i.e. such that for a single diffractive element, the 2D lattice of holes extends over a square, rectangular or circular portion of the surface of the waveguide) or may have any other shape. The shape of the region is independent of the lattice arrangement that is used for the 2D lattice of holes within the region. Figures 4 and 7 both show a substantially rectangular example in which the 2D lattice comprises 6x3 holes (in two different lattice configurations) and Figure 12 shows a rectangular example in which the 2D lattice comprises 4x3 holes; however, in practice a diffractive element may comprise many more holes, where the number of holes is dependent upon the size of the display (e.g. millions of holes for a large display). In some examples, different shaped regions comprising the 2D lattice of holes may be used instead of rectangular regions.

In the examples described above, each of the holes in the lattice is circular. In other examples, different shaped holes may be used, e.g. square or triangular holes. As the diffraction in any given direction is based on the ratio of the two materials, with circular holes the diffraction pattern will be dependent upon the pitch/radius combination. Having non-circular holes (of which blazed lattices are an example) changes the diffraction pattern in a given direction based on the changing pitch/radius ratio and provides more flexibility to achieve different diffraction patterns (e.g. a diffraction pattern can be tailored to direct more light in a pre-defined direction).

Typical waveguide devices for an AR device that rely upon gratings only work for a single colour of visible light and to produce a multi-colour device, three waveguide devices are used together, one each for red, green and blue wavelengths of a projected image. By using an improved diffractive element as described herein with the coupling elements (incoupling and/or outcoupling) comprising a straight (i.e. unblazed) Stampfli lattice of holes, only a single waveguide device, and as a consequence only a single set of input and output optics, is required for three-colour operation. This reduces the weight and complexity of the AR device significantly and may also reduce the power consumption (e.g. where a single light source can be used instead of three separate light sources because of the improved efficiency of the diffractive elements). This multi-colour device is enabled because for such diffractive elements, multimodal diffraction occurs, with multiple diffracted beams in the same direction. In an example, a multi-colour device may comprise a waveguide device with incoupling and outcoupling diffractive elements of 350nm pitch and 130nm hole radius. Experimental results showed efficiencies above 5% across a 40° FOV for 300nm bandwidth within the visible wavelength range.

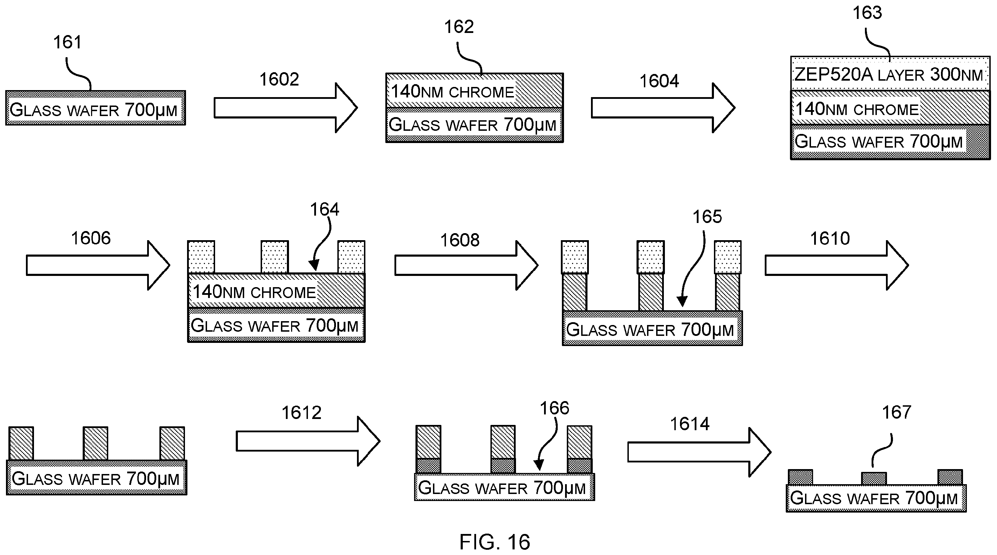

Figure 16 shows an example method of manufacture for an improved diffraction element as described herein which comprises a straight 2D lattice (e.g. as described above with reference to Figures 4-10). The method comprises depositing a chrome layer 162 on a glass wafer 161 (step 1602). In order to pattern the chrome layer 162, a resist layer 163 that can be patterned using an electron beam is then deposited on the chrome layer 162 (step 1604), e.g. using spin coating. The resist layer 163 is then patterned (step 1606), for example using electron-beam exposure and developed. This process (in step 1606) opens up windows 164 in the resist layer 163 to expose the underlying chrome layer 162. The chrome layer 162 is then etched (step 1608) where the resist 163 has been removed. The etching process may, for example, use a chlorine gas with an oxygen additive which etches the chrome through a combination of a chemical reaction and a physical ion etch. The resulting structure includes openings 165 in both the resist layer 163 and the chrome layer 162. The remaining resist layer 163 is then removed (step 1610), e.g. using plasma ashing, leaving the patterned chrome layer. There is then a further etching step (step 1612) which etches the glass where it is not protected by overlying chrome, e.g. using reactive ion etching (RIE). The etch depth may be around 300nm. The RIE process may use CHF3, which forms the gas product SiF4, and offers greater selectivity over CHF4. Oxygen and hydrogen may also be added to increase the etch rate. This etching process (in step 1612) forms the 2D lattice of holes 166 in the surface of the glass wafer 161. Finally the remaining chrome is removed (step 1614) to leave only the patterned glass wafer 167 which can be diced into pieces of the required size for the waveguide 102. The chrome may be removed using a wet etch. The dicing process is not shown in Figure 16. It will be appreciated that the steps may be implemented in different ways to those described above, e.g. through the use of alternative etch processes (e.g. physical ion beam billing) or other masking metals.

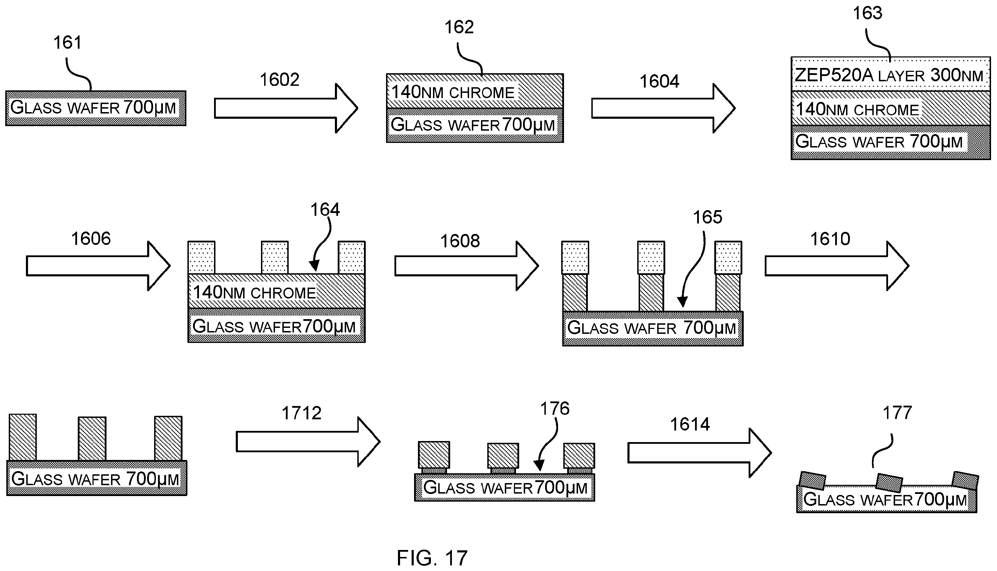

Figure 17 shows an example method of manufacture for an improved diffraction element as described herein which comprises a blazed 2D lattice (e.g. as described above with reference to Figures 11-15). The method is very similar to that described above with reference to Figure 16, however, a different method may be used to etch the glass where it is not protected by the overlying chrome in order to form the blazed 2D lattice (step 1712). The etching method that is used (in step 1712) provides an angled glass etch and in an example, ion beam milling at an angle selected to produce the desired blaze angle (e.g. ion beam milling at 30° to produce a 60° blaze angle). This etching process (in step 1712) forms the blazed 2D lattice of holes 176 in the surface of the glass wafer 161. Finally the remaining chrome is removed (step 1614) to leave only the patterned glass wafer 177 which can be diced into pieces of the required size for the waveguide 102. The chrome may be removed using a wet etch. The dicing process is not shown in Figure 17.

Whilst Figures 16 and 17 are shown in the context of a lattice of holes, the same methods may be used to fabricate a lattice of rods (e.g. by changing the patterning used in step 1606).

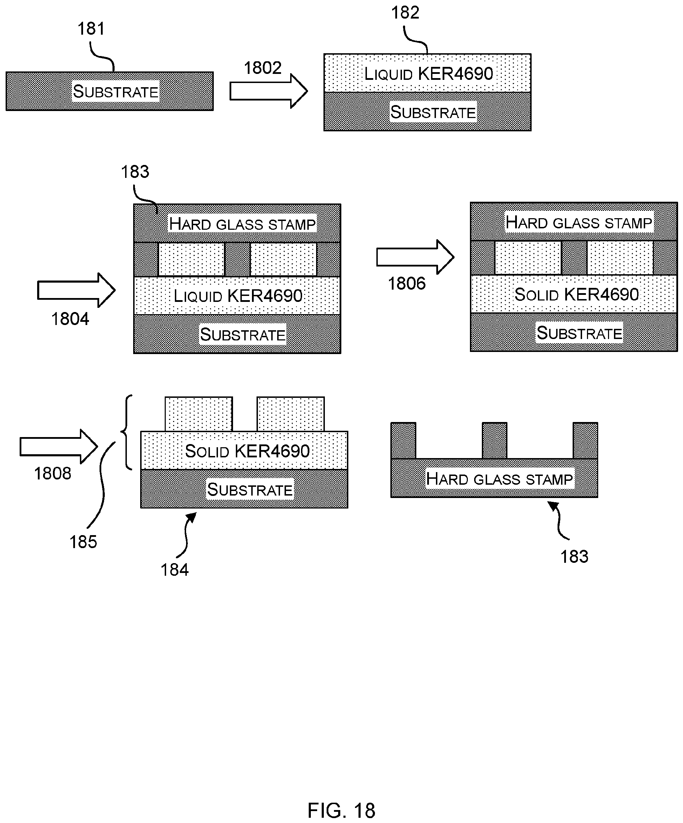

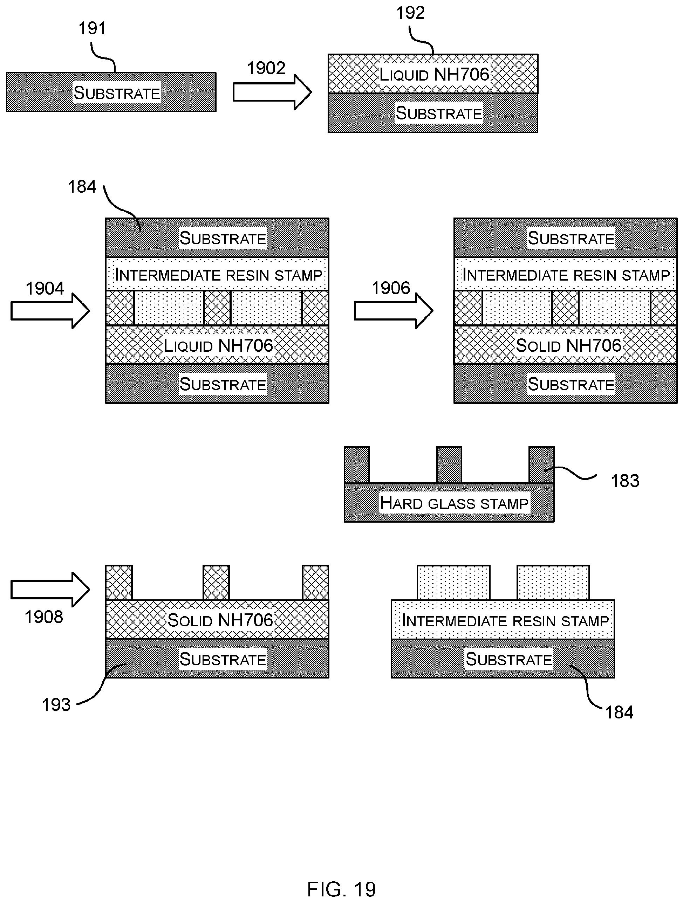

The methods of Figures 16 and 17 can be used to produce a waveguide device made of high refractive index glass that comprises one or more diffractive elements comprising 2D lattice of holes or rods, as described above. However, the methods are not suited to mass production. Figure 19 shows an improved an example method of manufacture for an improved diffraction element as described herein which has a high throughput and can be used to generate waveguide devices in high refractive index resin / polymer. Such waveguide devices are much lighter than corresponding ones made using glass and this reduces the overall weight of the AR device. The method of Figure 19 uses an intermediate resin stamp and the method of fabrication of this intermediate resin stamp is shown in Figure 18. Whilst Figures 18 and 19 show the methods for straight lattices, the same techniques could also be used for blazed lattices. Furthermore whilst the methods are shown in the context of a lattice of holes, the same methods may be used to fabricate a lattice of rods (e.g. by changing the stamp used).

Figure 18 shows an example method of creation of an intermediate resin stamp 184. The method comprises depositing a layer of resin 182 onto a substrate 181 (step 1802). The resin layer 182 may, for example, be spun onto the substrate (in step 1802). A hard stamp 183, which may be formed in glass and may have been fabricated using the method of Figure 16 or 17 is then pressed into the resin layer (step 1804) and the resin layer is hardened (step 1806). In the example shown in Figure 18, the resin used is hardened by UV and so the resin layer is hardened (in step 1806) by UV exposure. In other examples, a thermal setting resin may be used. Prior to pressing the stamp 183 into the resin layer, there may be a step of aligning the stamp and the substrate (not shown in Figure 18). The hard stamp 183 is then removed (step 1808) to leave the intermediate resin stamp 184 which comprises a patterned layer of hardened resin 185 which has a shape which is the inverse of the hard stamp 183. The substrate 181 that is used to form the intermediate stamp 184 may be flexible in order to assist with demolding.

Figure 19 shows how the intermediate stamp 184 can be used to fabricate waveguide devices 193 from a high refractive index, high transparency, resin. A substrate 191 is coated with the resin 192 (step 1902), e.g. using spin coating. The intermediate stamp 184, which may have been coated with an antistick layer (e.g. a silane layer, not shown in Figure 19) is aligned and brought into contact with the resin layer 192 (step 1904). The resin layer is then hardened (step 1906), e.g. using UV exposure if the resin is UV-hardenable or using heat for a thermal setting resin. The intermediate resin stamp 184 is then removed (step 1908) leaving a final structure 193 which is a copy of the original hard master 183. This final structure 193 can be diced into pieces of the required size for the waveguide 102. The dicing process is not shown in Figure 19.

By using a plastic substrate 191, the weight of the final structure 193 is significantly reduced compared to a glass waveguide 102.

By using an intermediate stamp 184 as shown in Figure 19, where this intermediate stamp is an inverted version of the desired structure, the amount of stamping that is performed using a master stamp is reduced, which reduces the wear on the master. The alternative approach would be for the master itself to have the inverted structure and be used to stamp and form each final structure (e.g. using a method similar to that shown in Figure 19).

By using an imprint method, such as shown in Figure 19 and described above, it is possible to mass produce the diffraction elements described herein (e.g. using roll-to-roll or roll-to-plate fabrication). This reduces both fabrication time and cost.

The diffraction devices and manufacturing methods described herein enable assembly of an AR device, such as a HUD or HMD, which has improved manufacturability, optical performance, weight and/or visual quality. For example, use of either a high refractive index glass or resin allow for 99% transparency and the photonic crystal or quasicrystal diffraction elements have a much smaller impact on visibility of the real world (i.e. environment visibility) to the user compared to use of surface relief gratings. Use of a straight 2D triangular lattice or a blazed 2D Stampfli lattice increases the FOV compared to existing grating-based devices. Use of a 2D lattice of holes which is a photonic crystal or quasiphotonic crystal improves the coupling efficiency compared to the use of surface relief gratings. Use of a straight 2D triangular lattice or square lattice or a blazed single mode Stampfli lattice increases the bandwidth of the coupling element and multimoded Stampfli lattices enable multi-colour operation. The waveguide devices may be fabricated using glass-etching (as described with reference to Figures 16 and 17) or nanoimprint techniques (as described with reference to Figures 18 and 19).

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A waveguide device (100) for use in an augmented reality device, the waveguide device comprising:
a transparent waveguide (102); and
a plurality of diffractive elements, wherein the plurality of diffractive elements comprise at least two of: an incoupling diffractive element (104), an outcoupling diffractive element (106) and a pupil expansion element, wherein at least one of the diffractive elements in the plurality of diffractive elements comprises a two-dimensional, 2D, lattice of holes or rods formed in a surface of the waveguide, wherein the 2D lattice of holes or rods is a photonic crystal or photonic quasicrystal.

2. The waveguide device according to claim 1, wherein each of the diffractive elements in the plurality of diffractive elements comprises a 2D lattice of holes or rods formed in a surface of the waveguide, wherein the 2D lattice of holes or rods is a photonic crystal or photonic quasicrystal.

3. The waveguide device according to claim 1, wherein at least one of the diffractive elements in the plurality of diffractive elements comprises a grating.

4. The waveguide device according to any of the preceding claims, wherein the outcoupling diffractive element comprises a two-dimensional, 2D, lattice of holes or rods formed in a surface of the waveguide, wherein the 2D lattice of holes or rods is a photonic or quasiphotonic crystal.

5. The waveguide device according to any of claims 1-4, wherein the 2D lattice of holes or rods is:
a 2D triangular lattice of holes or rods; or
a 2D square lattice of holes or rods; or
a 2D Stampfli lattice of holes or rods.

6. The waveguide device according to any of the preceding claims, wherein the 2D lattice of holes or rods are formed at an angle that is not perpendicular to the surface of the waveguide.

7. The waveguide device according to claim 6, wherein the holes or rods are formed using an angled etch.

8. The waveguide device according to claim 6 or 7, wherein the 2D lattice is a 2D lattice of holes and wherein the holes are half-conical or rounded tapering trenches.

9. The waveguide device according to any of claims 1-7, wherein the holes or rods are circular or wherein the holes or rods are non-circular.

10. The waveguide device according to any of claims 1-7, wherein the holes or rods are circular and each hole or rod has a radius of 250nm or less.

11. The waveguide device according to any of the preceding claims, wherein a pitch of the holes or rods in the 2D lattice does not exceed 500nm.

12. The waveguide device according to any of the preceding claims, wherein the waveguide is formed from resin.

13. An augmented reality device comprising a waveguide device according to any of the preceding claims.

14. The augmented reality device according to claim 13, wherein the augmented reality device is a heads up display or a head mounted display.

15. A method of manufacturing a waveguide device according to any of claims 1-12, the method comprising:
coating a substrate with a layer of resin (1902);
applying an intermediate resin stamp to the layer of resin (1904);
curing the resin (1906); and
removing the intermediate resin stamp (1908),
wherein the intermediate resin stamp is formed by:
coating a second substrate with a layer of a second resin (1802);
applying a hard master device to the layer of the second resin (1804), wherein the hard master device comprises a 2D lattice of holes or rods formed in a surface of the waveguide, wherein the 2D lattice of holes or rods is a photonic crystal or photonic quasicrystal;
curing the second resin (1806); and
removing the hard master device (1808).
